# EUROPÄISCHE PATENTANMELDUNG

(11) **EP 2 164 021 A1**
(43) Veröffentlichungstag der Anmeldung: **17.03.2010**
(21) Anmeldenummer: 08014977.6
(22) Anmeldetag: 25.08.2008
(51) Int. Cl.: G06F 21/24

(54) **Verfahren zum Erkennen eines unerwünschten Zugriffs und Netz-Servereinrichtung**

(71) Anmelder: SEARCHTEQ GmbH, 81673 München (DE)
(72) Erfinder: Hantke, Reimar, 82211 Herrsching (DE); Kremer, Klaus, 81929 München (DE)
(74) Vertreter: Emmerling, Friedrich

(57) **Zusammenfassung**

Es wird ein Verfahren beschrieben, automatisierte Zugriffe auf Informationen von einem Zugriffsursprung aus anhand ihrer Häufigkeit, also unter Einbezug weiterer Charakteristika, wie etwa ob gewisse Zeichenfolgen, die in der Anfrage enthalten sind, zu erkennen und gegebenenfalls weitere Zugriffe von diesem Zugriffsursprung aus zu sperren. Weiterhin wird eine Netz-Servereinrichtung mit einer derartigen Sperreinrichtung beschrieben.

## Beschreibung

Die Erfindung betrifft ein Verfahren zum Erkennen eines unerwünschten Zugriffs sowie eine entsprechende Netz-Servereinrichtung.

Der Datentransfer über Computernetzwerke stellt ein wichtiges Mittel für die Kommunikation zwischen Nutzern dieser Computernetzwerke oder auch zum Führen und Abwickeln von Geschäften dar. Die Vernetzung wird leitungsgebunden oder mittels Funkverbindungen realisiert. Mittels eines Computernetzwerkes sind einzelne oder Gruppen von Computern miteinander verbunden. Das derzeit größte Computernetzwerk stellt das Internet dar. Die Kommunikation über das Internet erfolgt über ein gemeinsames Protokoll, einzelne Benutzer (Englisch: User) sind z.B. über die sogenannte Internetprotokolladresse bzw. IP-Adresse ihres Computers oder Computernetzwerkes oder auch über eine MAC Adresse oder eine Ethernet ID identifizierbar.

Mittels einer Benutzeroberfläche (Englisch: User Interface) auf dem Computer können die Benutzer beispielsweise Anfragen eingeben.

Der Abruf von Daten im Internet wird mittels Zugriffen bzw. Anfragen oder Abfragen auf sogenannte Netzseiten (Englisch: Websites) vorgenommen, welche auf einem sogenannten Applikationsserver, insbesondere einem sogenannten Netzserver (Englisch: Webserver) abgelegt sind. Ein Applikationsserver kann statische Information, d.h. Information die bereits in Dateien vorliegt, oder/und dynamisch generierte, d.h. erst in Hinblick auf eine Anfrage hin erstellte Information, darstellen. Beispielsweise wird über eine Suchmaschine Information dynamisch generiert, indem Seiten des Netzes oder Information aus dem Netz auf den Rechner der Suchmaschine heruntergeladen werden und die durchsuchten Seiten für eine weitere Verarbeitung indiziert werden. Zum Ursprung der Anfrage werden Verweise auf diese Seiten gesendet. Eine Netzseite, die diese Verweise enthält, wird erst bei Abruf der Verweise generiert.

Die Darstellung von statischen oder dynamisch erstellten Websites erfolgt mittels sogenannter "Webbrowser", welche als "Kunde" (Englisch: dient) zu den Webservern angesehen werden. Die englischen Begriffe sind im deutschen Fachjargon aufgenommen und werden daher im Folgenden verwendet.

Oftmals erfolgen die Zugriffe zum Abfragen von Daten automatisiert, um ein Handeln durch den Internetbenutzer zu umgehen, sodass dieser beispielsweise keine Seiten mit Werbung betrachten muss oder auch um Daten eines Webservers systematisch abzufragen und gegebenenfalls weiter zu verarbeiten. Durch diese systematischen Abfragen können Datenbestände einer Datenbank abgefragt werden und zumindest zum Teil kopiert werden. Je nachdem welche Daten abgefragt werden, besteht das Problem, dass Daten in Verbindung zu anderen Informationen gesetzt werden und so letztlich sensible Informationen nicht autorisierten Stellen zugänglich sind.

Es ist daher Aufgabe der Erfindung, eine Möglichkeit zu schaffen unerwünschte, insbesondere automatisierte Zugriffe, insbesondere auf einen Server, effektiv und kostengünstig zu erkennen.

Diese Aufgabe wird durch ein Verfahren oder eine Netz-Servereinrichtung gemäß den unabhängigen Ansprüchen gelöst. Vorteilhafte Weiterbildungen sind Gegenstand der abhängigen Ansprüche.

Das erfindungsgemäße Verfahren zum Erkennen eines Zugriffs von mindestens einem Zugriffsursprung über ein Zugriffsnetzwerk weist folgende Schritte auf: Mindestens ein Zugriffsursprung wird festgestellt und eine Anzahl von Zugriffen von diesem mindestens einem Zugriffsursprung aus wird innerhalb eines ersten Zeitraums ermittelt. Die festgestellte Anzahl von Zugriffen wird mit zumindest einer ersten Zugriffszahlschwelle verglichen. Falls die festgestellte Anzahl von Zugriffen größer als die erste Zugriffszahlschwelle ist, so wird eine Sperrmitteilung ausgegeben. Der mindestens eine Zugriffsursprung kennzeichnet die Herkunft des Zugriffes. Es kann sich also insbesondere um einen Computer oder ein Computernetzwerk handeln, von dem aus ein Benutzer Zugriffe initiiert. Der mindestens eine Zugriffsursprung kennzeichnet somit einen Ort oder einen Bereich, dem der Zugriff entspringt. Der mindestens eine Zugriffsursprung kann alternativ auch eine virtuelle Adresse oder einen virtuellen Adressbereich bezeichnen, von dem der Zugriff erfolgt. Beispielsweise können die Zugriffe auch automatisiert von einem Programm als Benutzer veranlasst werden.

Die Sperrnachricht kann insbesondere durch ein Flag oder/und einen Eintrag in ein Protokollfile oder/und eine Textnachricht oder/und eine Nachricht an eine Einheit oder Softwarekomponente gebildet werden. Sie kann darüber hinaus ein Befehl oder eine Anweisung an eine andere Einrichtung oder ein anderes Softwaremodul sein, durch den oder die ein weiterer Zugriff vom Zugriffsursprung zwingend oder optional unterbunden wird.

Dieses Vorgehen hat den Vorteil, dass Anfragen, die mit einer bestimmten Häufigkeit erfolgen, erkannt werden können. Solche Zugriffe oder Anfragen deuten auf automatisierte Zugriffe hin.

Gemäß einer vorteilhaften Weiterbildung wird eine zweite Anzahl von Zugriffen innerhalb eines zweiten Zeitraumes ermittelt. Dieser zweite Zeitraum ist vom ersten Zeitraum verschieden.

Die Verschiedenheit vom ersten und zweiten Zeitraum kann insbesondere in einem unterschiedlichen Startzeitpunkt des Zeitraumes, Endzeitpunkt des Zeitraumes oder/und Länge des Zeitraumes liegen.

Die zweite Anzahl von Zugriffen wird mit einer zweiten Zugriffszahlschwelle verglichen. Ein Ausgeben einer Sperrmitteilung erfolgt, wenn die zweite festgestellte Anzahl von Zugriffen größer als die zweite Zugriffszahlschwelle ist.

Erste oder/und zweite Zugriffszahlschwelle können insbesondere in Abhängigkeit vom Zeitraum festgelegt werden. Zusätzlich oder alternativ kann die Zugriffszahlschwelle in Abhängigkeit von einer Menge oder/und Typ von abgefragten Daten festgelegt werden. Beispielsweise können hinsichtlich des Typs die Daten in unterschiedliche Gruppen unterteilt werden, wobei für eine Gruppe mehr Abfragen zulässig sind als für eine andere. In Bezug auf die Menge kann beispielsweise ein Limit in Hinblick auf die erhaltenen Datensätze gesetzt werden.

Dieses Vorgehen hat den Vorteil, dass automatische Anfragen mit unterschiedlichen Häufigkeiten erkannt werden können. So ist es beispielsweise für den Fall, dass der erste Zeitraum kürzer als der zweite Zeitraum gewählt wird und die Zugriffe innerhalb des zweiten Zeitraums so verteilt sind, dass die erste Zugriffszahlschwelle nicht überschritten wird aber dennoch über den längeren zweiten Zeitraum eine Vielzahl von Zugriffen erfolgt, so ist es möglich auch diesen Zugriff zu erkennen. Somit können Zugriffe mit unterschiedlichen zeitlichen Granularitäten erkannt werden. Insbesondere können Zugriffe mit einer sehr hohen Zugriffsfrequenz in einem kurzen Zeitraum, welche oft auch als Datensauger mit hoher Zugriffsfrequenz bezeichnet werden, oder Zugriffe, die sich über einen langen Zeitraum erstrecken und so eine hohe Zugriffszahl erreichen, die oft als Datensauger über einen langen Zeitraum bezeichnet werden, erkannt werden. Diese Zugriffe können dann beispielsweise gesperrt werden.

Gemäß einer weiteren vorteilhaften Weiterbildung erfolgt ein Sperren von weiteren Zugriffen von dem Zugriffsursprung aus, wenn zumindest eine Sperrmitteilung vorliegt. Dadurch können weitere Zugriffe in Abhängigkeit von festgelegten Kriterien unterbunden werden. Insbesondere kann so ein Schutz der Daten, die mittels des Zugriffs abgefragt werden sollten, gewährleistet werden.

Gemäß einer weiteren Weiterbildung wird der Zugriffsursprung anhand zumindest eines Teils einer Adresse erkannt bzw. festgestellt. Bei der Adresse kann es sich insbesondere um eine Netzwerkadresse, beispielsweise eine IP-Adresse handeln. Zur Identifikation der Herkunft dient oft bereits ein Teil einer Netzwerkadresse, da damit auch ein bestimmtes Unter-Netzwerk, im Falle einer IP-Adresse beispielsweise des Internets, gekennzeichnet wird.

Gemäß einer Weiterbildung wird weiterhin die Anzahl von Zugriffen in einem Kontrollzeitraum ermittelt und diese Anzahl mit einer Kontrollschwelle verglichen. Liegt die weiter festgestellte Anzahl über dieser Kontrollschwelle, so wird zumindest ein Teil der festgestellten Adresse des Zugriffsursprungs mit zumindest einem Eintrag in einer Liste verglichen. Der zumindest eine Eintrag in der Liste wird durch zumindest einen Teil einer Adresse gebildet. Beispielsweise wird im Falle einer IP-Adresse xxx.yy.zzz.* der Teil xxx.yy.zzz mit entsprechenden IP-Adresseinträgen in der Liste verglichen.

Zumindest ein Teil der festgestellten Adresse wird ausgegeben, wenn die festgestellte Adresse nicht in der Liste enthalten ist. Die Ausgabe kann insbesondere in eine Protokolldatei wie in ein sogenanntes Logfile erfolgen. Alternativ oder zusätzlich kann eine Ausgabe als elektronische Nachricht, insbesondere E-Mail, an einen bestimmten Empfänger erfolgen. Dieses Vorgehen hat insbesondere den Vorteil, dass schnell erfasst werden kann, ob von dem Zugriffsursprung her bereits in der Vergangenheit häufig Zugriffe erfolgten. Damit können dann beispielsweise Aktionen wie etwa das Sperren von weiteren Zugriffen schnell und zielgerichtet erfolgen.

Gemäß einer Weiterbildung wird der Kontrollzeitraum länger als erste und zweite Zeiträume gewählt. Dies ermöglicht die Identifikation automatischer Zugriffe auch für relativ geringe Häufigkeiten, die sich jedoch über einen langen Zeitraum erstrecken und so eine hohe Anzahl von Zugriffen realisieren.

Dieses Vorgehen hat den Vorteil, dass beispielsweise ein langer Kontrollzeitraum in der Größenordnung von einem Tag oder Tagen im Vergleich zu kurzen ersten und zweiten Zeiträumen im Bereich von Sekunden oder Stunden gewählt wird. Im Fall von häufigen Zugriffen in dem Kontrollzeitraum kann dann ein Vergleich mit Adressen erfolgen, von denen in zurückliegenden Zeiträumen aus häufig Zugriffe erfolgten. Damit kann für den Fall, dass die Adresse oder ein Teil davon in der Liste enthalten ist, auf frühere Entscheidungen bezüglich des zur festgestellten Adresse gehörigen Zugriffsursprungs zurückgegriffen werden. Dies ermöglicht eine schnelle Entscheidung und vermeidet unnötige Doppelarbeit.

Gemäß einer Weiterbildung erfolgt ein Sperren weiterer Zugriffe, wenn eine Ausgabe des zumindest einen Teils der festgestellten Adresse erfolgt. Dies hat den Vorteil, dass Zugriffe von Zugriffsursprüngen, die noch nicht in der Liste enthalten sind, unterbunden werden können.

Gemäß einer Weiterbildung wird zumindest ein Teil einer festgestellten Adresse in die Liste aufgenommen wenn die vorbestimmte Kontrollschwelle im Kontrollzeitraum überschritten wird. Dies erlaubt eine effektive Überwachung von Zugriffsursprüngen mit hoher Zugriffsfrequenz.

Gemäß einer Weiterbildung wird der zumindest ein Teil der Adresse mit einer Ausnahmenliste verglichen. Ein Sperren von weiteren Zugriffen von dem zu Adresse gehörigen Zugriffsursprung erfolgt, wenn nicht der zumindest eine Teil der Adresse in der Ausnahmeliste enthalten ist. Dieses Vorgehen hat insbesondere den Vorteil, dass Zugriffe bestimmter Herkunft, insbesondere interne Zugriffe oder von Überwachungswerkzeugen erlaubt werden können. Insbesondere kann das Vergleichen mit der Ausnahmeliste auch zumindest einer Überprüfung oder mehreren Überprüfungen der Zugriffszahlen vorgeschaltet sein.

Gemäß einer anderen Weiterbildung wird der Zugriff in Bezug auf eine Kennung untersucht und eine Sperrmitteilung ausgegeben, wenn der Zugriff zumindest eine festgelegte Kennung aufweist. Bei der Kennung kann es sich insbesondere um eine Zeichenfolge (Englisch: String) oder ein Format handeln, durch das der Zugriff charakterisiert ist. Beispielsweise kann die Kennung durch eine Zeichenfolge gebildet werden, die in der Anfrage enthalten ist. Insbesondere kann es sich hierbei um die Zeichenfolge "http/1.0" handeln.

Dieses Vorgehen hat den Vorteil, dass automatisierte Anfragen die, da sie in einer bestimmten Programmiersprache vorgenommen sind, auch durch gewisse Formen oder Formatierungen oder Zeichenfolgen erkenntlich sind, als automatische Anfragen wahrgenommen werden können.

Vorzugsweise wird zumindest ein Kriterium das zur Ausgabe einer Sperrmitteilung führt, gespeichert. Dieses Kriterium kann durch die Anzahl von Zugriffen oder/und Format oder/und Zeitraum oder/und Kontrollzeitraum oder/und einer Aktionsbeschreibung "Sperren" oder "Ausgabe" gebildet werden.

Dies hat den Vorteil, dass auf diese gespeicherten Daten im Bedarfsfall rückgegriffen werden kann.

Insbesondere erfolgt das Sperren von Zugriffen von einem Zugriffsursprung aus für eine festgelegte Auszeit. Diese kann insbesondere in Abhängigkeit von zumindest einem Kriterium, das zum Sperren oder zur Ausgabe der Sperrnachricht führt, festgelegt werden. Dies hat den Vorteil, dass beispielsweise an die Häufigkeit angepasste Auszeiten verhängt werden.

Gemäß einer weiteren Weiterbildung wird eine Nachricht erstellt, die zumindest eines der abgespeicherten Kriterien, die zur Sperrung oder zur Ausgabe der Sperrmitteilung führen, enthält. Diese Nachricht kann insbesondere angezeigt oder als E-Mail an eine vorgegebene Adresse gesandt werden.

Vorzugsweise enthält die Nachricht die Adresse des Zugriffsursprungs oder/und die Kriterien des Sperrens oder der Ausgabe oder/und einen Zeitpunkt der Sperrung oder der Ausgabe oder/und einen Entsperrzeitpunkt oder/und eine Auszeit. Damit kann die Nachricht zum weiteren Bearbeiten des Zugriffes von dieser Adresse aus verwendet werden.

Insbesondere kann ein manuelles Zurücksetzen der Sperre oder eine automatische Zurücksetzung der Sperre nach Ablauf der Auszeit oder zu einem Entsperrzeitpunkt erfolgen.

Der Zugriff kann insbesondere mittels eines Webbrowsers erfolgen, wobei das Internet das Zugriffsnetzwerk bildet. Dies ermöglicht den Zugriff von Daten im Internet.

Die Erfindung betrifft ferner ein Computerprogramm, mittels dem ein derartiges Verfahren auf einem Computer oder einem Computernetzwerk ausgeführt werden kann.

Weiterhin betrifft die Erfindung ein computerlesbares Medium, das computerlesbare Anweisungen enthält, die geeignet sind, einen Computer oder ein Computernetzwerk zur Ausführung eines derartigen Verfahrens zu veranlassen.

Gemäß einer weiteren vorteilhaften Ausführungsform, die mit allen bisherigen Ausführungsformen kombiniert werden kann, werden zumindest zwei der Schritte auf zumindest zwei unterschiedlichen Netzwerkebenen bzw. Schichten ausgeführt. So kann z.B. der eine Schritt in der Netzzugangsschicht und der andere Schritt in der Internet-, Transport-oder Anwendungsschicht durchgeführt werden. Alternativ können die Schritte in zwei verschiedenen Schichten parallel ausgeführt werden. So gewinnt man z.B. während des ersten Zeitraums Informationen über Zugriffe von einem Zugriffsursprung in zwei verschiedenen Schichten, so dass man z.B. über die Anwendungsschicht die IP-Adresse und über die Internetschicht die MAC-Adresse des Zugriffsursprungs bestimmen kann. Dies ermöglicht das Gewinnen von zusätzlichen Informationen über den Zugriffsursprung und somit eine sicherere Erkennung des Zugriffs.

Gemäß einer weiteren vorteilhaften Ausgestaltung werden Zugriffe einem Muster zugeordnet, das die Art des Zugriffs kennzeichnet. Falls ein gleiches Muster bei einem gleichen Datenursprung vorliegt, wird eine Sperrnachricht ausgegeben.

Eine erfindungsgemäße Netz-Servereinrichtung weist eine Sicherheitseinrichtung zum Erkennen von Zugriffen auf. Diese Sicherheitseinrichtung weist weiterhin eine Feststellungseinrichtung zum Feststellen des Zugriffsursprungs auf, eine Ermittlungseinrichtung zum Ermitteln der Anzahl von Zugriffen von dem ermittelten Zugriffsursprung innerhalb eines vorgegebenen Zeitraums, eine Vergleichseinrichtung zum Vergleichen der festgestellten Anzahl von Zugriffen mit einem Schwellwert sowie eine Ausgabeeinrichtung zum Ausgeben einer Sperrnachricht, wenn die festgestellte Anzahl von Zugriffen größer als die Schwelle ist. Die Sicherheitseinrichtung ist also ausgebildet, die entsprechenden Schritte des erfindungsgemäßen Verfahrens sowie der Weiterbildungen davon auszuführen.

Die Sicherheitseinrichtung kann Bestandteil der Netz-Servereinrichtung sein oder mit dieser in Kommunikationsverbindung stehen. Die Sicherheitseinrichtung kann im letzteren Falle insbesondere eine sogenannte Brandmauer (Englisch: Firewall) sein.

Gemäß einer vorteilhaften Weiterbildung weist die Netz-Servereinrichtung weiterhin eine Sperreinrichtung auf, mittels der Zugriffe vom Zugriffsursprung beim Vorliegen einer Sperrnachricht gesperrt werden. Diese Sperreinrichtung kann insbesondere Bestandteil der Sicherheitseinrichtung sein. Alternativ kann die Sperreinrichtung lediglich in einer Kommunikationsverbindung mit der Sicherheitseinrichtung stehen. Insbesondere kann die Sperreinrichtung Bestandteil einer Firewall sein.

Die Erfindung wird im Folgenden anhand von ausgewählten Beispielen erläutert, die teilweise in den Figuren dargestellt sind.

Es zeigen:
Figur 1 einen schematischen Zugriff von einem Zugriffsursprung auf eine Suchmaschine;
Figur 2 einen schematischen Überblick über das weitere Vorgehen, wenn besondere Kriterien vorliegen;
Figur 3 ein Ausführungsbeispiel für das Vorgehen, wenn Sperr- oder Ausgabekriterien vorliegen;
Figur 4 eine schematische Ausgestaltung einer Netz-Servereinrichtung.

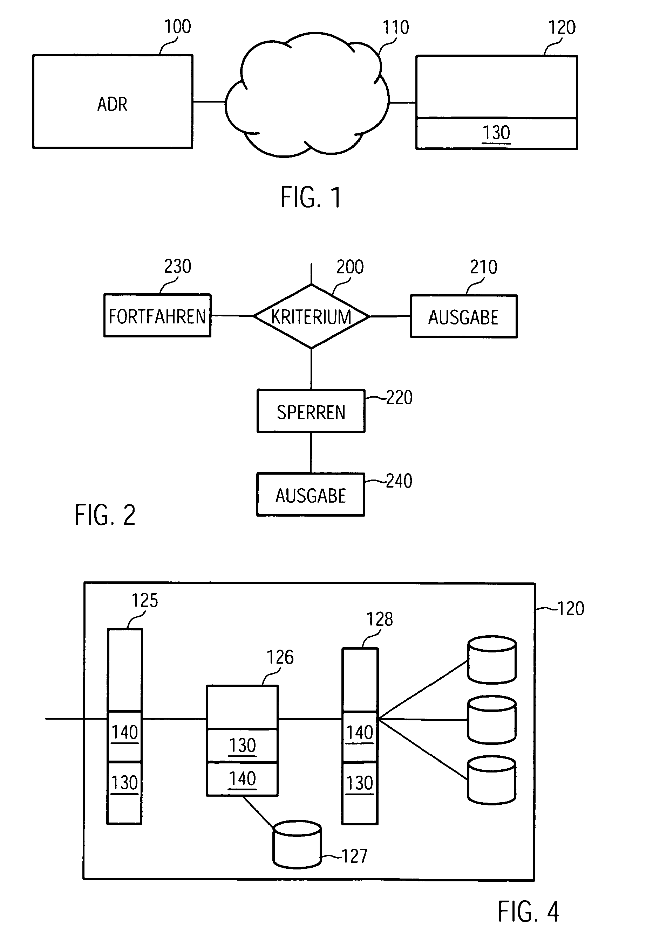

In Figur 1 ist ein Zugriff von einem Zugriffsursprung 100 über ein Zugriffsnetzwerk 110 auf eine Netz-Servereinrichtung 120 dargestellt. Bei dem Zugriffsursprung 100 handelt es sich bevorzugt um einen vernetzten Computer, der über seine Internetprotokolladresse bzw. IP-Adresse ADR charakterisiert ist. Alternativ oder zusätzlich ist eine Charakterisierung über weitere Identifikationszeichen, wie etwa einer MAC Adresse oder einer Netzwerk ID, wie etwa einer Ethernet ID vorgesehen. Der Zugriffsursprung ist dabei nicht auf einen Ort oder einen lokalen Bereich beschränkt, sondern er kann auch virtuelle Adressen oder Adressbereiche umfassen, von denen aus entsprechende Abfragen an eine Netz-Servereinrichtung 120 geschickt werden.

Der Zugriff erfolgt bevorzugt mittels eines so genannten Webbrowsers über das Internet als Zugriffsnetzwerk 110. Alternativ oder zusätzlich sind Zugriffe über andere Programme oder/und andere Zugriffsnetzwerke vorgesehen. Die Ausgestaltung richtet sich z.B. nach der Art der Information, die mittels des Zugriffs abgefragt werden soll oder/und der Vernetzung.

Ein Browser ermöglicht generell die Ansicht von Informationen. Diese Informationen werden aufgrund des Zugriffs von der Netz-Servereinrichtung 120 zur Verfügung gestellt. Ein Webbrowser stellt im Internet verfügbare Informationen dar. Die Information kann statisch oder dynamisch erstellt sein. Alternativ können andere Programme oder sogenannte "clients" verwendet werden, die je nachdem auf welcher Anwendungsschicht mit der Netz-Servereinrichtung 120 kommuniziert wird, entsprechende Anfragen an die Netz-Servereinrichtung absendet.

Um nun bestimmte Arten von Zugriffen zu verhindern oder zumindest darüber informiert zu sein, wird, wie in Figur 2 dargestellt, zumindest ein Kriterium 200 festgelegt, in Abhängigkeit von dem der Schritt Fortfahren 230 oder/und Sperren 220 oder/und Ausgabe 210 erfolgt. In Anschluss an das Sperren kann eine Ausgabe 240 erfolgen.

Insbesondere existieren mehrere Prüfschleifen bzw. "loops", die zu der Ausgabe einer Sperrnachricht oder/und einer nachfolgenden Sperrung führen können.

Bei einer solchen Sperrmitteilung handelt es sich um Information aufgrund derer eine Sperrung vorgenommen wird, wenn die Information der für die Sperrung zuständigen Instanz zugänglich gemacht wird. Es kann sich also insbesondere um ein sogenanntes "Flag" handeln, das im Rahmen eines Programms gesetzt wird und z.B. bei einer Abarbeitung eben zu einer Sperrung führt. Alternativ oder zusätzlich kann es sich um einen Befehl handeln, der an eine Einheit oder Softwarekomponenten gesendet wird oder/und eine Textmitteilung, die z.B. an einen oder mehrere Computer oder Computernetzwerke oder auch weitere leitungsgebunden oder über Funkverbindung vernetzte Terminals gesendet wird, oder/und einen Eintrag in eine Protokoll- bzw. Log-Datei oder Konfigurationsdatei. Die Art der Sperrmitteilung kann also insbesondere von der Ausgestaltung des Netzwerkes und dem Informationsbedarf anderer Punkte im Netzwerk sowie der erforderlichen Schnelligkeit einer Reaktion auf einen Zugriff abhängen.

Für eine Prüfschleife, die sich auf die Zugriffsanzahl bezieht, wird die Anzahl von Zugriffen festgestellt und für jeden Zugriff erfolgt ein Eintrag in einem Protokollfile bzw. "Log-Eintrag". Überschreitet die Anzahl der Einträge einen für die Prüfschleife festgelegten Sperrparameter, so werden Zugriffe von diesem Zugriffsursprung für eine von der Prüfschleife abhängige Sperrzeit gesperrt. Erfolgt eine Sperrung, so erfolgt eine entsprechende Mitteilung an den Benutzer bzw. den Zugriffsursprung.

Dies ist für ein konkretes Beispiel in folgenden Tabellen für eine erste und eine zweite Prüfschleife dargestellt:

### Prüfschleife 1:

| Zugriffe in 20 s | Logeinträge pro Zugriff | Sperrparameter | Sperrzeit |
|---|---|---|---|
| 120 | 1 | 120 | 48 Stunden |

### Prüfschleife 2:

| Zugriffe in 10 h | Logeinträge pro Zugriff | Sperrparameter | Sperrzeit |
|---|---|---|---|
| 3000 | 1 | 3000 | 48 Stunden |

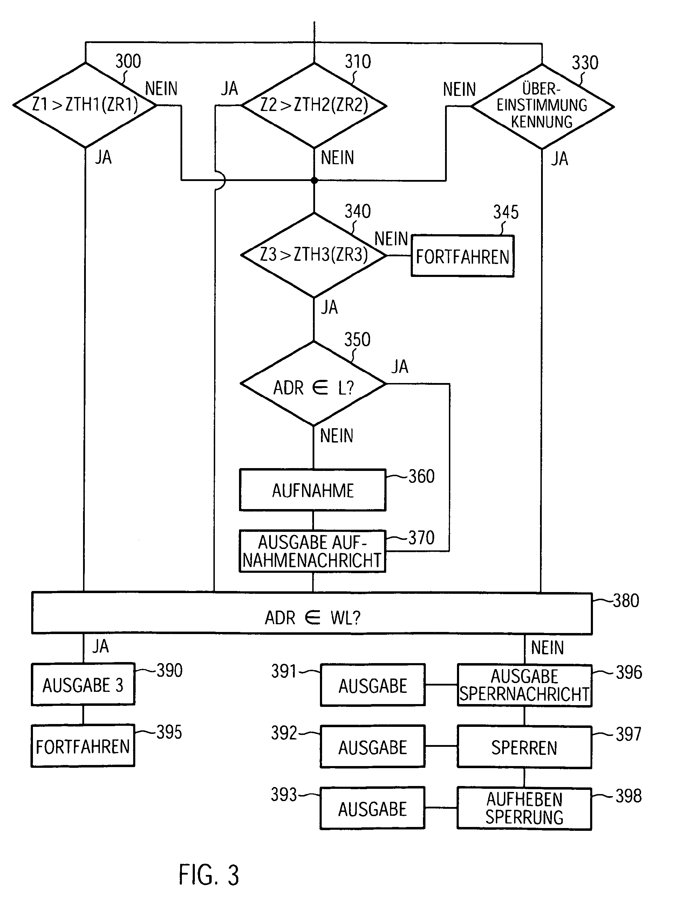

In Figur 3 ist ein weiterer beispielhafter Ablauf zum Prüfen von und Vorgehen bei Anfragen schematisch dargestellt.

Im Falle einer Anfrage wird in einem ersten Prüfschritt 300 zunächst die Anzahl von Zugriffen Z1 in einem ersten Zeitraum ZR1 ermittelt. Liegt diese Anzahl über einer ersten Zugriffsschwelle ZTH1, so schließt sich nach Ermittlung der Adresse bzw. Herkunft des Zugriffs ein Vergleichsschritt 380 an, in dem überprüft wird, ob sich die Adresse oder ein Teil davon auf einer Ausnahmeliste WL befindet. Die erste Schwelle ZTH1 wird insbesondere in Abhängigkeit von dem ersten Zeitraum ZR1 festgelegt. Um den Zweck des Prüfschritts 300 zu erläutern, wird kurz der Gesamtzusammenhang dargestellt, der nachfolgend im Einzelnen erläutert wird. Dabei werden in dem gezeigten Beispiel die Zugriffe in der Anwendungsschicht auf der Ebene des HTTP-Protokolls ermittelt.

Bei der Adresse handelt es sich insbesondere um eine IP-(Internet Protokoll) Adresse oder um einen Teil dieser Adresse. Hat beispielsweise die IP-Adresse die Form xxx.yy.zzz*, so genügt es, zur Identifikation der Herkunft nur die ersten zwei oder drei Blöcke zu betrachten, über die zwar nicht der individuelle Rechner, jedoch die Domäne bekannt ist.

In der Ausnahmeliste WL befindet sich zumindest ein Teil von zumindest einer Adresse, denen erweiterte Zugriffsrechte gewährt werden, so dass eine Überschreitung bestimmter Schwellwerte von Zugriffsursprüngen, denen diese Adressen zugeordnet sind, nicht geahndet wird. Handelt es sich bei der ermittelten Adresse um eine Adresse oder Bestandteil der Adresse, die in dieser Ausnahmeliste ist, dann kann mit den Zugriffen fortgefahren werden. Gegebenenfalls wird eine Nachricht ausgegeben, die einerseits zu Dokumentationszwecken in so genannte "Logfiles", in denen Ereignisse protokolliert werden, eingetragen wird, andererseits einer Benutzerinformation dienen kann.

Der Prüfschritt 300 hat also den Vorteil, dass Anfragen mit einer bestimmten Häufigkeit erkannt werden können, so dass automatische Anfragen herausgefiltert werden können. Automatische Anfragen weisen oft eine hohe Zugriffsfrequenz in einem beispielsweise kurzen Zeitraum auf.

Wird im Prüfschritt 300 festgestellt, dass die ermittelte Anzahl von Zugriffen Z1 die erste Schwelle ZTH1 nicht überschreitet, so wird mit einem weiteren Prüfschritt 340 fortgefahren, falls nicht mit dem Vergleichsschritt 380.

Parallel dazu wird im weiteren Prüfschritt 310 verglichen, ob eine weitere ermittelte Anzahl von Zugriffen in einem weiteren Zeitraum ZR2 eine weitere Schwelle ZTH2 überschreitet. Der weitere Zeitraum ZR2 wird insbesondere länger als der erste Zeitraum ZR1 gewählt und auch die weitere Schwelle ZTH2 wird an diesen längeren Zeitraum angepasst. Der zweite Zeitraum startet insbesondere mit dem ersten Zeitraum.

Alternativ kann dieser weitere Prüfschritt 310 im Anschluss an Prüfschritt 300 erfolgen. Somit kann beispielsweise, falls eine Überschreitung schon gemäß Prüfschritt 300 stattfindet, auf weitere Überprüfungen verzichtet werden.

Weiterhin alternativ oder zusätzlich können Prüfschritt 300 und weiterer Prüfschritt 310 in unterschiedlichen Schichten erfolgen. Für den Fall, dass es sich bei dem Zugriffsnetzwerk 110 um das World Wide Web im Internet handelt, können die Prüfschritte 300 und 310 in den unterschiedlichen Schichten des TCP/IP-Referenzmodells erfolgen, z.B. in der Netzzugangsschicht, der Internetschicht, der Transportschicht oder der Anwendungsschicht. Dies hat den Vorteil, systematische Abfragen noch effektiver erkennen zu können.

Überschreitet die weitere Anzahl von Zugriffen Z2 die weitere Schwelle ZTH2, so folgt der Vergleichsschritt 380, falls nicht, mit dem Prüfschritt 340.

Der Vorteil dieser weiteren Prüfung im Prüfschritt 310 liegt darin, dass so automatische Anfragen erkannt werden können, die mit unterschiedlichen Häufigkeiten erfolgen.

Zusätzlich können in zumindest einem weiteren Prüfschritt Zugriffszahlen in weiteren Zeiträumen in Bezug auf weitere Schwellen überprüft werden.

Weiterhin parallel dazu wird im Prüfschritt 330 das Format der Anfrage oder eines Teils davon festgestellt und mit zumindest einem vorgegebenen Format oder einem Teil davon verglichen.

Gemäß einer speziellen Ausführungsform der Erfindung können automatische Anfragen über ihre Form oder/und über das Protokoll, über das sie ausgeführt werden, oder/und die Protokollversion überprüft werden. Dabei kann ermittelt werden, ob eine sogenannte Skriptanfrage mit der Hypertext-Übertragungsprotokollversion 1.0 erfolgt und somit die Zeichenfolge http/1.0 aufweist.

Unter einem Skript versteht man ein Programm, das in einer sogenannten Skriptsprache geschrieben ist. Dies ist eine Programmiersprache, die dahingehend vereinfacht ist, dass auf Elemente, wie etwa den Deklarationszwang von Variablen verzichtet wird, die erst bei größeren Software-Projekten von Vorteil sind. HTTP bezeichnet ein Hypertextübertragungsprotokoll zur Übertragung von Daten über ein Netzwerk. Es findet insbesondere Anwendung, um Daten, wie etwa Webseiten aus dem World Wide Web in einen Webbrowser zu laden. Die Versionsnummer 1.0 bezeichnet eine ältere Version, die von den gängigen Browsern meist nicht mehr verwendet wird und deshalb einen Hinweis auf skriptbasierte automatische Anfragen liefert.

Die Prüfung bezieht sich also im Fall einer Http/1.0 Anfrage darauf, ob die Kennung "Http/1.0" im Anfragentext enthalten ist.

In diesem Zusammenhang sei erwähnt, dass eine Vielzahl von Informationen und Datenbanken über das Hypertext-Übertragungsprotokoll abgefragt werden können bzw. über das World Wide Web zugänglich gemacht worden sind. Damit ist die Abfrage über das Hypertext-Übertragungsprotokoll derzeit am weitesten verbreitet. Alternativ können solche Anfragen auch z.B. über Java-Serveletts oder Java Applikationen, z.B. über HTTP-Tunneling durchgeführt werden. Auch in einem solchen Fall kann der Zugriffsursprung ermittelt und, wenn nötig, protokolliert werden.

Alternativ kann Prüfschritt 330 den anderen Prüfschritten vorgeschaltet sein. Damit können Anfragen, die diese Zeichenfolgen erhalten von vorneherein schnell und effektiv aussortiert werden.

Liegt eine Übereinstimmung mit einem vorgegebenen Format oder einem Teil davon vor, so wird mit dem Vergleichsschritt 380 fortgefahren. Liegt keine Übereinstimmung vor, so schließt sich der Prüfschritt 340 an.

In Figur 3 ist also eine parallele Bearbeitung der Prüfschritte 300, 310, 330 dargestellt.

Alternativ kann eine zeitliche Staffelung der Prüfungsschritte 300, 310, 330 vorgenommen werden. Beispiele für eine zeitliche Staffelung wurden bereits genannt. Es sind jedoch auch andere zeitliche Abfolgen vorgesehen.

Zusätzlich können Zugriffszahlen in einem oder mehreren weiteren Zeiträumen ermittelt werden und mittels weiteren Schwellwertvergleichen ebenfalls als Kriterium herangezogen werden.

Im Prüfschritt 340 wird überprüft, ob eine weitere Anzahl von Zugriffen Z3 innerhalb eines Kontrollzeitraums ZR3 über einer Kontrollschwelle ZTH3 liegt. Ist dies nicht der Fall, so wird im Schritt 345 fortgefahren. Wird die Kontrollschwelle ZTH3 überschritten, so wird mit dem Vergleichsschritt 350 fortgefahren.

Der Kontrollzeitraum beginnt in dem in Figur 3 dargestellten Beispiel nach den in Prüfschritten 300 und 310 genannten Zeiträumen. Alternativ zu einer zeitlichen Staffelung kann auch dieser Kontrollzeitraum gleichzeitig mit den anderen Zeiträumen beginnen.

Der Vorteil des Prüfschrittes 340 liegt darin, dass zum einen Anfragen mit weiteren unterschiedlichen zeitlichen Häufigkeiten erfasst werden und so als automatische Anfragen identifiziert werden können. Zum anderen wird in dem Vergleichsschritt 350 festgestellt, ob eine Herkunftsbezeichnung ADR, insbesondere eine IP-Adresse, bereits früher hochfrequent abgefragt hat. Dazu werden täglich die anfragenden IP-Adressbereiche auf die ersten zwei bzw. drei Blöcke geclustert, d.h. die Adressen werden in der Form xxx.yy.zzz abgespeichert und die Häufigkeit der Anfragen mit dem Wert der zwei Vortage verglichen. Dazu wird der Kontrollzeitraum ZR3 auf einen Tag gesetzt und die Internetadresse oder eben ein Teil dieser Internetadresse abgespeichert, wenn die zugehörige Kontrollschwelle ZTH3 durch die Anzahl von Zugriffen Z3 überschritten wird. Die abgespeicherten Internetadressen oder Teile davon werden in einer Liste abgespeichert. Ist nun der Vergleichsschritt 350 erfolgreich, d.h. zumindest ein Teil der Internetadresse ist in der Liste enthalten, so heißt dies, dass von diesem Zugriffsursprung her bereits in vergangenen Zeiträumen hochfrequent abgefragt wurde.

Abfragen aus einem lokalen Netzwerk erfolgen oft über einen sogenannten Proxy-Server, der als Vermittler die Seitenanfragen entgegennimmt und dann unter seiner eigenen Adresse an die Netz-Servereinrichtung 120 weiterleitet. Damit weisen alle Anfragen aus diesem lokalen Netzwerk die gleiche Adresse auf, auch wenn sie von unterschiedlichen Rechnern oder Terminals in dem lokalen Netzwerk stammen.

Um unerwünschte Anfragen von erlaubten Anfragen zu unterscheiden, kann in einer weiteren, bevorzugten Ausführungsform der Erfindung neben der Adresse auch die Art der Abfrage bzw. des Zugriffs gespeichert werden. Unter Art der Abfrage wird bevorzugterweise z.B. eine spezifische Struktur oder ein spezifisches Muster der Abfrage verstanden. Gemäß dieser spezifischen Struktur oder diesem spezifischen Muster werden systematisch gleiche oder ähnliche Informationen abgefragt. Bei ständigen Wiederholungen derartiger Anfragen können z.B. systematisch Informationen gesamter Datenbanken abgefragt werden.

Als Beispiel seien Abfragen von Familiennamen auf Basis von bekannten Straßennamen und Hausnummern in einer Stadt genannt. Zweck dieser Abfragen ist eine vollständige Erfassung aller Bewohner in einem Teil der Stadt. Die verschiedenen Abfragen weisen dabei z.B. das spezifische Muster auf, dass systematisch die Hausnummern und die Straßennamen variiert werden.

Auch Anfragen, die auf die Gewinnung eines vollständigen Datensatzes, also beispielsweise alle Daten, Personen oder gewerbliche Adressen in einer Stadt oder mehreren Städten, abzielen können einem Muster zugeordnet werden. Beispielsweise könnte sich das Muster aus mehreren Untermustern zusammensetzen, wie etwa Suche nach Parameter 1 Gärtnerei in Parameter 2 Stadt. Durch Variation der beiden Parameter, also etwa Parameter 1 bezüglich verschiedener Branchen und Parameter 2 hinsichtlich verschiedener Städte kann ein vollständiger Datensatz erhalten werden. Eine andere Möglichkeit, um einen vollständigen Datensatz hinsichtlich einer Stadt zu gewinnen wäre Parameter 2 fix zu lassen und etwa Parameter 1 dem Alphabet oder einer sonstigen Reihenfolge nach zu variieren. Existiert nun ein solches Muster und werden diese Informationen von der gleichen Adresse her abgefragt, so wird eine Sperrnachricht ausgegeben und weitere Zugriffe ggf. gesperrt.

Liegt kein offensichtliches Muster bei gleicher Adresse vor, so erfolgt keine Sperrung. Werden dagegen Zugriffe von einem oder mehreren Zugriffsursprüngen festgestellt, wobei die Zugriffsanzahl innerhalb eines Zeitraums über einem spezifischen Wert liegt und zumindest ein bestimmter Anteil der Zugriffe ein spezifisches Muster aufweist, so wird bevorzugterweise eine Sperrmitteilung für die Zugriffsursprünge ausgegeben, deren Zugriffe das spezifische Muster aufweisen.

War der zumindest eine Teil der Internetadresse bisher nicht Bestandteil der Liste L, so erfolgt eine Aufnahme in diese Liste in einem Aufnahmeschritt 360.

Zusätzlich kann eine Aufnahmenachricht in einem Ausgabeschritt 370 ausgegeben werden. Diese Aufnahmenachricht kann insbesondere durch einen Eintrag in einem Protokoll oder Logfile erfolgen. Auf Basis des Logfiles kann eine automatische oder manuelle Zuordnung der Internetadresse erfolgen sowie eine manuelle oder automatische Bewertung, an die sich gegebenenfalls eine Sperrung anschließt.

Eine Aufnahme in die Liste L kann auch manuell vorgenommen werden, wenn sich aus anderen Gründen Verdachtsmomente auf Missbrauch ergeben. Die Liste L kann in bestimmten Zeiträumen bereinigt werden, d.h. die zumindest enthaltenen Teile von Internetadressen werden gelöscht, wenn für eine bestimmte Zeit von dem zur Internetadresse gehörenden Zugriffsursprung aus nicht mehr mit hoher Frequenz zugegriffen wird.

In einem Vergleichsschritt 380 wird überprüft, ob die ermittelte IP-Adresse oder der Teil dieser Adresse in einer Ausnahmeliste WL enthalten ist. In dieser Ausnahmeliste WL sind Herkunftsbezeichnungen, also insbesondere IP-Adressen oder Teile hiervon enthalten, denen häufige Zugriffe erlaubt sind. Damit können Anfragen von internen Zugriffursprüngen erlaubt werden. Durch diese Adressen sind beispielsweise interne Proxy-Server gekennzeichnet.

Dementsprechend liegt die Ausnahmeliste insbesondere in einem Format vor, bei dem eine laufende Nummer einer einzelnen Adresse, z.B. der Adresse 1.2.3.4 oder dem sogenannten "localhost" zugeordnet ist oder eine laufende Nummer einer Vielzahl von Adressen, beispielsweise wird die Folge 1.2.3 oder 1.2.3<-> 5 als die Adressengruppe 1.2.3.0 bis 1.2.3.255 interpretiert. Als "localhost" wird ein Name für eine IP-Adresse bezeichnet, der über einen sogenannten dynamischen Namensserver oder DNS-Server aufgelöst, d.h. in eine Nummer überführt werden kann. Alternativ oder zusätzlich kann die Folge 1.2.0.0/16 als die Adressengruppe 1.2.0.0 -1.2.255.255 interpretiert werden. Für eine sichere Identifikation darf die laufende Nummer nicht doppelt sein.

Ist die Adresse in der Ausnahmeliste wie WL enthalten, so kann in einem weiteren Schritt 390 eine Ausgabe in ein Logfile erfolgen. Damit wird ein Überblick über hochfrequente Zugriffe, auch von internen Adressen aus, ermöglicht. Im Anschluss daran wird in einem Schritt 395 fortgefahren.

Ist die Adresse nicht in der Ausnahmeliste enthalten, so erfolgt in einem Ausgabeschritt 396 die Ausgabe einer Sperrnachricht. In Reaktion darauf wird bevorzugterweise in einem weiteren Schritt 397 eine Sperrung vorgenommen. Diese Sperrung wird in einem weiteren Schritt 398 nach Ablauf einer Sperrzeit oder zu einem bestimmten Entsperrzeitpunkt wieder aufgehoben. Das Aufheben kann alternativ oder zusätzlich auch manuell erfolgen.

Die Sperrzeit oder Sperrdauer oder ein Entsperrzeitpunkt kann bereits in der Sperrnachricht festgelegt sein. Diese Sperrnachricht enthält bevorzugterweise weiterhin die IP-Adresse des gesperrten Zugriffsursprungs sowie den Grund der Sperrung, also beispielsweise Sperrung aufgrund des Prüfschritts 300, 310 oder 330. Zusätzlich kann die ermittelte Anzahl von Zugriffen angegeben werden. Weiterhin zusätzlich kann die Sperrnachricht einen Auszug aus einem Logfile mit einer Kennzeichnung der Applikation, im Rahmen derer eine Sperrung erfolgte, enthalten. Als Kennzeichnung kann insbesondere die sogenannte URL, ein einheitlicher Quellenanzeiger (Englisch: Uniform Resource Locator) verwendet werden, über die eine Ressource über das verwendete Netzwerkprotokoll, also beispielsweise eine HTTP-Protokoll und dem Ort der Ressource in Computernetzwerken angegeben wird. Die Schritte 396, 397, 398 werden in zugeordneten Ausgabeschritten jeweils in ein Logfile ausgegeben.

In dem in Fig. 3 gezeigten Beispiel wurden bestimmte zeitliche Abläufe beschrieben. Wie bereits teilweise dargelegt, können die Schritte auch anders zeitlich gestaffelt ablaufen. Insbesondere kann eine Überprüfung, ob eine Adresse in einer Ausnahmeliste enthalten ist, auch allen anderen Schritte vorangestellt sein. Die gewählte zeitliche Reihenfolge kann insbesondere auch vom jeweiligen Rechenaufwand der einzelnen Schritte abhängen, so dass beispielsweise weniger rechenintensive Schritte zunächst durchgeführt werden, um ggf. mit ihnen schon eine Entscheidung bzgl. einer Sperrung herbeizuführen.

Weiterhin können auch weitere Ausgabeschritte erfolgen oder Ausgabeschritte weggelassen werden. Dies richtet sich nach den Dokumentierungserfordernissen und Informationserfordernissen für die Benutzer des Verfahrens.

Wie bereits erwähnt können die einzelnen Schritte insbesondere die Schritte 300, 310 und 340 auch in zumindest zwei unterschiedlichen Schichten erfolgen.

Über einen sogenannten Proxyserver, der als Vermittler zwischen Netzwerken auftritt, ist es möglich, dass eine Vielzahl von Benutzern Anfragen an die Netz-Servereinrichtung 120 initiieren. Da der Proxyserver die Anfragen der Benutzer unter seiner eigenen IP-Adresse an die Netz-Servereinrichtung 120 weiterleitet, kann dies den Eindruck erwecken, dass ein einziger Zugriffsursprung eine Vielzahl von Zugriffen initiiert, obwohl die Vielzahl von Zugriffen unkoordiniert von einer Mehrzahl von Rechnern aus erfolgt. Um möglichst viel Information bezüglich derartiger Zugriffe zu erhalten, wird bevorzugterweise Information in zumindest zwei unterschiedlichen Schichten zu sammeln.

Je nachdem wo und in welcher Schicht oder/und welchen Schichten der Zugriff protokolliert wird, z.B. in einer sogenannten "Brücke" (English: Bridge), d.h. einem Zugang (Englisch: Gateway) von eine lokalen Netzwerk zu einem weiteren Netzwerk auf der Ebene der Schicht 2 bzw. "link layer", oder einem Netzwerkknoten (English: Router), d. h. einer derartigen Verbindung auf der Ebene der Schicht 3, bzw. "internet layer", kann auch die MAC Adresse des Zugriffsursprungs alternativ oder zusätzlich protokolliert werden.

Es können also insbesondere eine oder mehrere Schichten gezielt für eine Protokollierung ausgewählt werden. Im Falle eines Angriffs, d.h. falls Zugriffe als systematisch oder automatisiert oder anderweitig unerwünscht erkannt wurden, können gezielt eine oder mehrere weitere Schichten dazu genommen werden. Diese Schichten können darüberliegend, beispielsweise eine Anwendungsschicht, oder darunterliegende Schichten sein, beispielsweise eine Netzzugangsschicht. Je nach Ausgestaltung des Kommunikationsprotokolls können so entsprechende Identifikationsmöglichkeiten ausgeschöpft werden.

In den oben beschriebenen Verfahrensschritten können die Zeiträume ZR1 und ZR2 sowie die Schwellwerte ZTH1 und ZTH2 statisch oder dynamisch bestimmt werden. So können, wie bereits oben beschrieben, für die Zeiträume ZR1 und ZR2 und eventuell weiterer Zeiträume z.B. feste Werte festgelegt werden, die sich allerdings voneinander unterscheiden können.

Alternativ können die Zeiträume ZR1 und ZR2 und eventuell weitere Zeiträume bevorzugterweise in Abhängigkeit des Zugriffsursprungs und/oder der Tageszeit und/oder der Ortszeit am Zugriffsursprung flexibel bestimmt werden. So ist es z.B. möglich, je nach Zugriffsursprung unterschiedliche Zeiträume ZR1 und ZR2 und eventuell weitere Zeiträume zu definieren.

In gleicher Weise ist es möglich, die Schwellwerte ZTH1 und ZTH2 und eventuell weitere Schwellwerte in Abhängigkeit des Zugriffsursprungs variabel zu definieren. So kann z.B. für ein Gateway, einen Router oder Proxy-Server eines großen Internet Service Providers, über den eine große Anzahl von Internetnutzern Zugriff auf das Internet hat, deutlich höhere Schwellwerte ZTH1 und ZTH2 festgelegt werden als für einen Einzelrechner oder für ein Gateway, einen Router oder Proxy-Server eines kleinen lokalen Netzwerkes. Denn über ein Gateway, einen Router oder Proxy-Server eines großen Internet Service Providers wie z.B. 1&1, AOL, T-Home usw. werden erwartungsgemäß eine viel höhere Anzahl von berechtigten Zugriffen auf die Netz-Servereinrichtung 120 pro Zeiteinheit erfolgen, als von einem kleinen lokalen Netzwerk. So werden bevorzugterweise nach Ermittlung des Zugriffsursprungs und einer entsprechenden Zuordnung des Zugriffsursprungs zu einem Internet Service Provider und/oder einer Organisation und/oder einem lokalem Netzwerk hierfür spezifische Schwellwerte ZTH1 und ZTH2 und eventuell weitere spezifische Schwellwerte festgelegt. Diese spezifischen Schwellwerte können in einer Nachschlagetabelle oder auch Lookup Table genannt abgelegt sein. Diese spezifischen Schwellwerte können aber auch in einer Datenbank zusammen mit den Netzwerkadressen und/oder Hostname, Länderkennung des Zugriffsursprungs, Ortsangaben des Zugriffsursprungs, Angaben des Internet Service Providers, über den der Zugriff erfolgte, und/oder Angaben der Organisation oder Unternehmung, in der der Zugriffsursprung liegt, gespeichert sein. Alternativ können diese spezifischen Schwellwerte auch auf Zugriffswerten basieren, die für die jeweiligen Zugriffsursprünge über einen gewissen Zeitraum ermittelt wurden. So kann z.B. für den Proxy-Server mit der IP-Adresse 62.153.195.210, für den der Standort Rosenheim, der Internet Service Provider Deutsche Telekom AG und die Organisation XY ermittelt wird, über einen gewissen Zeitraum eine durchschnittliche Anzahl von n Zugriffen pro Stunde an Werktagen ermittelt worden sein. Beispielsweise kann der Schwellwert ZTH1 definiert werden als ZTH1 = *x***n* und der Schwellwert ZTH2 definiert werden als ZTH2 *= y*n,* wobei x und *y* reelle Zahlen sind.

Wurden für den Zugriffsursprung mit der IP-Adresse 62.153.195.210 durchschnittlich 10 Zugriffe pro Stunde an Werktagen ermittelt, so wird beispielsweise für einen ersten Zeitraum ZR1 von 1 Minute ein erster Schwellwert ZTH1 von 50 Zugriffen festgelegt. Für einen zweiten Zeitraum ZR2 von 1 Stunde wird ein zweiter Schwellwert von 200 Zugriffen festgelegt. Erfolgen von diesem Zugriffsursprung mit der IP-Adresse 62.153.195.210 z.B. nun mehr als 70 Zugriffe pro Minute, lässt dies auf ein untypisches Benutzerverhalten schließen. Durch Überschreiten des Schwellwerts ZTH1 kann eine Sperrmitteilung ausgegeben werden, die eine Sperrung der Zugriffe auf die Netz-Servereinrichtung 120 von dem Zugriffsursprung mit der IP-Adresse 62.153.195.210 zur Folge hat.

Die Zeiträume und Schwellwerte können alternativ oder zusätzlich auch in Abhängigkeit von der Ortszeit des Zugriffsursprungs und/oder dem Werktag festgelegt werden. Hierzu kann auf vorher definierte Werte oder Nutzerprofile für die Zeiträume und Schwellwerte zurückgegriffen werden, die in Lookup Tables oder Datenbanken gespeichert sind. Alternativ können während des Betriebs der Netz-Servereinrichtung 120 Zugriffsprofile in Abhängigkeit des Zugriffsursprungs und/oder der Ortszeit des Zugriffsursprungs und/oder des Wochen-oder Kalendertages erstellt werden. Die Zeiträume und Schwellwerte werden dann dynamisch entsprechend dem Zugriffsursprung und/oder der Ortszeit des Zugriffsursprungs und/oder dem Wochen- oder Kalendertag festgelegt. Damit kann ganz gezielt dem unterschiedlichen Benutzerverhalten Rechnung getragen werden. Erfahrungsgemäß sind spät nachts (Ortszeit des Zugriffsursprungs) und an Wochenenden deutlich geringere Zugriffszahlen zu verzeichnen als nachmittags und abends an Werktagen. Hohe Zugriffszahlen innerhalb der Zeiträume ZR1 und ZR2 sind zu diesen Ortszeiten eher unwahrscheinlich. Daher können die Schwellwerte zu diesen Ortszeiten deutlich niedrigere Werte haben als die Schwellwerte nachmittags und abends an Werktagen. Hohe Zugriffszahlen innerhalb der Zeiträume ZR1 und ZR2 deuten eher auf automatisierte Abfragen hin.

Um nichtautorisierte Zugriffe aus einem Botnetz oder auch Botnet zu erkennen, werden bevorzugterweise weitere Zeiträume und weitere Schwellwerte bestimmt, die die maximale Anzahl von Zugriffen innerhalb eines Zeitraumes für eine Gruppe von Zugriffsursprüngen und/oder alle Zugriffsursprünge festlegt. Diese weiteren Zeiträume und weiteren Schwellwerte können wie oben beschrieben statisch oder dynamisch bestimmt werden.

In Fig. 4 ist die Netz-Servereinrichtung 120 dargestellt. Bevorzugterweise umfasst die Netz-Servereinrichtung 120 einem Applikationsserver oder Webserver 126, eine oder mehrere Firewalls 125 und 128 und eine oder mehrere Datenbanken oder Datenspeicher 127.

Alternative kann die Netz-Servereinrichtung 120 auch nur aus einem Applikationsserver oder Webserver 126 bestehen. Außerdem umfasst die Netz-Servereinrichtung 120 eine Sicherheitseinrichtung 130 die entweder in einer der Firewalls 125 und 128 oder in dem Applikationsserver oder Webserver 126 eingerichtet ist.

Eine Firewall dient dazu, für den durch sie hindurchlaufenden Datenverkehr anhand vorbestimmter Vorgaben oder Regeln zu entscheiden, ob bestimmte Daten durchgelassen werden. Dadurch kann mittels einer Firewall ein Schutz vor unerlaubten Zugriffen erfolgen. Die Festlegung der Vorgaben oder Regeln wird auch als Konfigurierung bezeichnet.

Alternativ kann die Sicherheitseinrichtung 130 sowohl in einer der Firewalls 125 und 128 als auch in Applikationsserver oder Webserver 126 eingerichtet sein. Gemäß einer weiteren Ausführungsform wird die Sicherheitseinrichtung 130 als separate Softwarekomponente bereitgestellt. Applikationsserver oder Webserver 126, Firewalls 125 und 128 und die Datenbanken sind bevorzugterweise über eine oder mehrere drahtgebundene oder drahtlose Datenleitungen miteinander verbunden.

Zum Zugriff gehörende eingehende Daten passieren zunächst die erste Firewall 125, bevor sie zu dem Applikationsserver 126 gelangen, bei dem die Abfrage behandelt wird. Mittels eines Applikationsservers kann dynamisch oder statisch generierte Information dargestellt werden. Bei dem Applikationsserver 126 handelt es sich insbesondere um einen Webserver, auf dem Websites hinterlegt sind. Auch ein Webserver kann statische oder dynamisch generierte Information in Form von statischen oder dynamischen Webseiten darstellen.

Um Inhalte von dynamischen Webseiten zu generieren, wird beispielsweise der anzuzeigende Inhalt in einem Datenspeicher oder einer Datenbank 127 abgefragt und in die dynamisch generierte Webseite eingebunden. Hierfür wird auf einen Datenspeicher oder eine Datenbank 127 zugegriffen, die mit dem Applikationsserver in Kommunikationsverbindung steht. Alternativ ist der Datenspeicher 127 Bestandteil des Applikationsservers 126.

Wird auf besonders sensible Daten zugegriffen, so passieren die Abfrage bzw. zur Abfrage gehörende Daten eine weitere Firewall 128, bevor auf weitere Datenspeicher zugegriffen wird.

Die Datenspeicher oder Datenbanken dienen bevorzugterweise auch dazu, die oben beschrieben Werte oder Nutzerprofile für die Zeiträume und Schwellwerte sowie die Zugriffsprofile zu speichern.

Die Sicherheitseinrichtung 130 ist nun in erster Firewall 125, Applikationsserver 126 und zweiter Firewall 128 integriert.

Alternativ kann die Sicherheitseinrichtung nur in einer dieser Einheiten oder einer Untergruppe dieser Einheiten vorliegen.

Das Sperren des Zugriffs erfolgt über eine Sperreinrichtung 140 der Netz-Servereinrichtung 120, wenn eine Sperrnachricht vorliegt. Diese Sperreinrichtung kann Bestandteil der Sicherheitseinrichtung 130 sein oder getrennt davon realisiert werden. Eine getrennte Realisierung kann in einer Firewall erfolgen. Zur Sperrung wird von einer Ausgabeeinrichtung eine Sperrnachricht ausgegeben, wie an die Sicherheitseinrichtung 130 übertragen wird. Entsprechend der Information in der Sperrnachricht wird dann die Sperrung der Zugriffe, die von dem ermittelten Zugriffsursprung stammen, gemäß den oben beschriebenen Verfahrensschritten von der Sicherheitseinrichtung 130 durchgeführt. Je nach dem wie die Sicherheitseinrichtung 130 konfiguriert ist und auf welche Schichten sie Zugriff hat, sperrt sie die Zugriffe in der Netzzugangsschicht, der Internetschicht, der Transportschicht und/oder in der Anwendungsschicht entsprechend der Information in der Sperrnachricht. Alternativ wird der Zugriff von dem ermittelten Zugriffsursprung auf den Applikationsserver oder Webserver 126 und/oder die statische oder dynamische Webseiten des Applikationsserver oder Webserver 126 und/oder von dem Applikationsserver oder Webserver 126 bereitgestellte Informationen in vorher festgelegten Schichten von der Sicherheitseinrichtung 130 unterbunden. So kann zum Beispiel in der Firewall 125 durch die Sicherheitseinrichtung 130 der Zugriff von dem ermittelten Zugriffsursprung auf von dem Applikationsserver oder Webserver 126 bereitgestellte Informationen oder auf den Applikationsserver oder Webserver 126 direkt in der Netzzugangsschicht oder in der Internetschicht unterbunden werden.

Die Sperrung kann also insbesondere mittels einer Firewall, die dafür konfiguriert ist, oder mittels des Webservers erfolgen. Die Zugriffe können, wie bereits ausgeführt, auf unterschiedlichen Schichten, je nach Art des verwendeten Protokolls überprüft werden. Damit kann auf unterschiedliche Weise der Zugriffsursprung ermittelt werden. Diese Ermittlung kann auf Basis von Information aus einer Schicht oder aus den Informationen mehrerer Schichten, die beispielsweise miteinander kombiniert werden erfolgen. So kann beispielsweise ein Applikationsserver 126 oder ein Webserver in Verbindung mit zumindest einer Firewall 125, 128 auf mehreren Schichten gleichzeitig eine Identifikation vornehmen und ggf. weiterhin unter Nutzung des Musters der Abfragemuster der Zugriffe bzw. Abfragen in einer oder mehreren Schichten effektiver unerwünschte Zugriffe erkennen.

Diese Vorgehensschritte können je für sich getrennt, miteinander kombiniert oder iterativ zeitlich oder in Hinblick auf die Schichten abgestuft angewendet werden.

Zusammenfassend wird ein Verfahren beschrieben, automatisierte Zugriffe auf Information von einem Zugriffsursprung aus anhand ihrer Häufigkeit, also unter Einbezug weiterer Charakteristika, wie etwa ob gewisse Zeichenfolgen, die in der Anfrage enthalten sind, zu erkennen und gegebenenfalls weitere Zugriffe von diesem Zugriffsursprung aus zu sperren. Weiterhin wird eine Netz-Servereinrichtung mit einer derartigen Sperreinrichtung beschrieben.

### Bezugszeichenliste

- 100: Zugriffsursprung
- 110: Zugriffsnetzwerk
- 120: Netz-Servereinrichtung
- 125: Firewall
- 126: Applikationsserver
- 127: Datenspeicher
- 128: Firewall
- 129: Datenspeicher
- 130: Sicherheitseinrichtung
- 140: Sperreinrichtung
- 200: Kriterium
- 210: Ausgabe
- 220: Sperren
- 230: Fortfahren
- 240: Ausgabe
- 300: Prüfschritt
- 310: Prüfschritt
- 330: Prüfschritt
- 340: Prüfschritt
- 345: Fortfahren
- 350: Vergleichsschritt
- 360: Aufnahmeschritt
- 370: Ausgabeschritt
- 380: Vergleichsschritt
- 390: Ausgabe
- 391: Ausgabe
- 392: Ausgabe
- 393: Ausgabe
- 395: Fortfahren
- 396: Ausgabe Sperrnachricht
- 397: Sperren
- 398: Aufheben Sperrung

## Patentansprüche

1. Verfahren zum Erkennen eines unerwünschten Zugriffs von einem Zugriffsursprung (100) über ein Zugriffsnetzwerk (110) mit folgenden Schritten:
- Feststellen des Zugriffsursprungs (100);
- Ermitteln zumindest einer Anzahl der Zugriffe vom Zugriffsursprung (100) innerhalb zumindest eines ersten Zeitraums;
- Vergleichen der festgestellten Anzahl von Zugriffen mit zumindest einer ersten Zugriffszahlschwelle;
- Ausgeben einer Sperrmitteilung, wenn die festgestellte Anzahl von Zugriffen größer als die erste Zugriffszahlschwelle ist.

2. Verfahren nach Anspruch 1, mit den weiteren Schritten:
- Ermitteln zumindest einer zweiten Anzahl der Zugriffe vom Zugriffsursprung (100) innerhalb zumindest eines zweiten Zeitraums, welcher vom ersten Zeitraum verschieden ist;
- Vergleichen der festgestellten zweiten Anzahl von Zugriffen im zweiten Zeitraum mit zumindest einer zweiten Zugriffszahlschwelle;
- Ausgeben einer Sperrmitteilung wenn die zweite festgestellte Anzahl von Zugriffen größer als die zweite Zugriffszahlschwelle ist.

3. Verfahren nach Anspruch 1 oder 2, mit dem weiteren Schritt
- Sperren von weiteren Zugriffen des Zugriffsursprungs (100), wenn zumindest eine Sperrmitteilung vorliegt.

4. Verfahren nach einem der vorhergehenden Ansprüche, bei dem der Zugriffsursprung (100) anhand zumindest eines Teils einer Adresse, insbesondere einer Netzwerkadresse oder/und einer MAC Adresse, festgestellt wird.

5. Verfahren nach Anspruch 4, mit den weiteren Schritten
- Ermitteln zumindest einer weiteren Anzahl von Zugriffen vom Zugriffsursprung (100) innerhalb zumindest eines Kontrollzeitraums, welcher vom ersten Zeitraum verschieden ist;
- Vergleichen der festgestellten weiteren Anzahl von Zugriffen im Kontrollzeitraum mit zumindest einer vorgegebenen Kontrollschwelle;
- Abspeichern zumindest eines Teils der festgestellten Adresse, wenn die Anzahl der Zugriffe über einer Kontrollschwelle liegt;
- Vergleichen dieses zumindest einen Teils der Adresse mit einer Liste mit zumindest einem Teil von zumindest einer Adresse;
- Ausgeben des zumindest einen Teils der festgestellten Adresse, wenn die festgestellte Adresse nicht in der Liste enthalten ist.

6. Verfahren nach Anspruch 5, mit dem weiteren Schritt
- Sperren von weiteren Zugriffen, wenn eine Ausgabe des zumindest einen Teils der festgestellten Adresse erfolgt.

7. Verfahren nach Anspruch 5 oder 6, bei dem die Liste durch zumindest einen Eintrag aus einer Adresse oder eines Teiles der Adresse gebildet wird, wobei ein Eintrag in die Liste vorgenommen wird, wenn die Zugriffe vom zur Adresse gehörigen Zugriffsursprung (100) aus die Kontrollschwelle in dem Kontrollzeitraum überschreiten.

8. Verfahren nach einem der Ansprüche 5 bis 7, bei dem der Kontrollzeitraum länger ist als der erste Zeitraum und/oder der zweite Zeitraum.

9. Verfahren nach einem der Ansprüche 4 bis 8, mit dem weiteren Schritt:
- Vergleichen des zumindest einen Teils der Adresse des Zugriffsursprungs (100) mit einer Ausnahmeliste, welche zumindest einen Teil zumindest einer Adresse enthält;
- Sperren von weiteren Zugriffen wenn nicht der zumindest eine Teil der Adresse in der Ausnahmeliste enthalten ist.

10. Verfahren nach einem der vorhergehenden Ansprüche , mit dem weiteren Schritt:
- Analysieren des Zugriffs bezüglich einer Kennung, insbesondere einer Zeichenfolge,
- Ausgeben einer Sperrmitteilung, wenn der Zugriff zumindest eine festgelegte Kennung aufweist.

11. Verfahren nach einem der vorhergehenden Ansprüche, mit dem weiteren Schritt:
- Speichern zumindest eines Kriteriums (200), das zum Sperren (220) oder/und zur Ausgabe (210) einer Sperrmitteilung führt, wobei das zumindest eine Kriterium (200), durch die Anzahl von Zugriffen oder/und Format oder/und Zeitraum oder/und Kontrollzeitraum gebildet wird oder/und einer Aktionsbeschreibung, "Sperren" oder "Ausgabe".

12. Verfahren nach einem der vorhergehenden Ansprüche 3 bis 11 , bei dem das Sperren (220) von Zugriffen für eine festgelegte Auszeit, erfolgt, wobei die Auszeit in Abhängigkeit von zumindest einem Kriterium (200), das zum Sperren (220) oder zur Ausgabe (210) der Sperrnachricht führt, festgelegt wird.

13. Verfahren nach einem der vorhergehenden Ansprüche 11 oder 12, mit dem weiteren Schritt:
- Erstellen einer Nachricht mit zumindest einem der gespeicherten Kriterien (200).

14. Verfahren nach Anspruch 13, mit dem weiteren Schritt:
- Anzeigen der erstellten Nachricht oder/und Senden der erstellten Nachricht, insbesondere einer E-Mail, an eine vorgegebene Adresse

15. Verfahren nach einem der Ansprüche 13 oder 14, bei dem die Nachricht die Adresse des Zugriffsursprungs (100) oder/und die Kriterien (200) des Sperrens (220) oder der Ausgabe (210) oder/und den Zeitpunkt der Sperrung oder der Ausgabe oder/und einen Entsperrzeitpunkt oder/und eine Auszeit enthält.

16. Verfahren nach einem der vorhergehenden Ansprüche, mit dem weiteren Schritt
- manuelles Rücksetzen der Sperre (220) oder/und automatisches Rücksetzen der Sperre (220) nach Ablauf der Auszeit oder/und zum Entsperrzeitpunkt.

17. Computerprogramm zur Ausführung von Programmschritten gemäß einem der vorangegangenen Ansprüche.

18. Computerlesbares Medium mit computerlesbaren Instruktionen die dazu geeignet sind, ein Verfahren gemäß einem der Ansprüche 1 bis 16 auszuführen, wenn sie auf einem Computer abgearbeitet werden.

19. Netz-Servereinrichtung (120) zum Ermitteln von Daten die mittels eines Zugriffs abgefragt werden können
- mit einer Sicherheitseinrichtung (130) zum Erkennen von Zugriffen
wobei die Sicherheitseinrichtung (130) aufweist
- eine Feststellungseinrichtung zum Ermitteln des Zugriffsursprungs (100);
- eine Ermittlungseinrichtung zum Ermitteln der Anzahl der Zugriffen von dem ermittelten Zugriffsursprung innerhalb eines vorgegebenen Zeitraums;
- eine Vergleichseinrichtung zum Vergleichen der festgestellten Anzahl von Zugriffen mit einer Schwelle;
- einer Ausgabeeinrichtung zum Ausgeben einer Sperrnachricht, wenn die festgestellte Anzahl von Zugriffen größer als die Schwelle ist.

20. Netz-Servereinrichtung (120) nach Anspruch 19
mit einer Sperreinrichtung (140), welche insbesondere Bestandteil der Sicherheitseinrichtung (130) ist, zum Sperren von weiteren Zugriffen des Zugriffsursprungs (100) beim Vorliegen einer Sperrnachricht.

## Geänderte Patentansprüche

### Geänderte Patentansprüche gemäss Regel 137(2) EPÜ.

**1.** Verfahren zum Erkennen eines unerwünschten Zugriffs von einem Zugriffsursprung (100) über ein Zugriffsnetzwerk (110) mit folgenden Schritten:
- Feststellen des Zugriffsursprungs (100);
- Ermitteln zumindest einer Anzahl der Zugriffe vom Zugriffsursprung (100) innerhalb zumindest eines ersten Zeitraums;
- Vergleichen der festgestellten Anzahl von Zugriffen mit zumindest einer ersten Zugriffszahlschwelle;
- Ausgeben einer Sperrmitteilung, wenn die festgestellte Anzahl von Zugriffen größer als die erste Zugriffszahlschwelle ist;
- Ermitteln zumindest einer zweiten Anzahl der Zugriffe vom Zugriffsursprung (100) innerhalb zumindest eines zweiten Zeitraums, welcher vom ersten Zeitraum verschieden ist;
- Vergleichen der festgestellten zweiten Anzahl von Zugriffen im zweiten Zeitraum mit zumindest einer zweiten Zugriffszahlschwelle;
- Ausgeben einer Sperrmitteilung wenn die zweite festgestellte Anzahl von Zugriffen größer als die zweite Zugriffszahlschwelle ist.

**2.** Verfahren nach Anspruch 1, mit dem weiteren Schritt
- Sperren von weiteren Zugriffen des Zugriffsursprungs (100), wenn zumindest eine Sperrmitteilung vorliegt.

**3.** Verfahren nach einem der vorhergehenden Ansprüche, bei dem der Zugriffsursprung (100) anhand zumindest eines Teils einer Adresse, insbesondere einer Netzwerkadresse oder/und einer MAC Adresse, festgestellt wird.

**4.** Verfahren nach Anspruch 3, mit den weiteren Schritten
- Ermitteln zumindest einer weiteren Anzahl von Zugriffen vom Zugriffsursprung (100) innerhalb zumindest eines Kontrollzeitraums, welcher vom ersten Zeitraum verschieden ist;
- Vergleichen der festgestellten weiteren Anzahl von Zugriffen im Kontrollzeitraum mit zumindest einer vorgegebenen Kontrollschwelle;
- Abspeichern zumindest eines Teils der festgestellten Adresse, wenn die Anzahl der Zugriffe über einer Kontrollschwelle liegt;
- Vergleichen dieses zumindest einen Teils der Adresse mit einer Liste mit zumindest einem Teil von zumindest einer Adresse;
- Ausgeben des zumindest einen Teils der festgestellten Adresse, wenn die festgestellte Adresse nicht in der Liste enthalten ist.

**5.** Verfahren nach Anspruch 4, mit dem weiteren Schritt
- Sperren von weiteren Zugriffe, wenn eine Ausgabe des zumindest einen Teils der festgestellten Adresse erfolgt.

**6.** Verfahren nach Anspruch 4 oder 5, bei dem die Liste durch zumindest einen Eintrag aus einer Adresse oder eines Teiles der Adresse gebildet wird, wobei ein Eintrag in die Liste vorgenommen wird, wenn die Zugriffe vom zur Adresse gehörigen Zugriffsursprung (100) aus die Kontrollschwelle in dem Kontrollzeitraum überschreiten.

**7.** Verfahren nach einem der Ansprüche 4 bis 6, bei dem der Kontrollzeitraum länger ist als der erste Zeitraum und/oder der zweite Zeitraum.

**8.** Verfahren nach einem der Ansprüche 3 bis 7, mit dem weiteren Schritt:
- Vergleichen des zumindest einen Teils der Adresse des Zugriffsursprungs (100) mit einer Ausnahmeliste, welche zumindest einen Teil zumindest einer Adresse enthält;
- Sperren von weiteren Zugriffen wenn nicht der zumindest eine Teil der Adresse in der Ausnahmeliste enthalten ist.

**9.** Verfahren nach einem der vorhergehenden Ansprüche , mit dem weiteren Schritt:
- Analysieren des Zugriffs bezüglich einer Kennung, insbesondere einer Zeichenfolge,
- Ausgeben einer Sperrmitteilung, wenn der Zugriff zumindest eine festgelegte Kennung aufweist.

**10.** Verfahren nach einem der vorhergehenden Ansprüche, mit dem weiteren Schritt:
- Speichern zumindest eines Kriteriums (200), das zum Sperren (220) oder/und zur Ausgabe (210) einer Sperrmitteilung führt, wobei das zumindest eine Kriterium (200), durch die Anzahl von Zugriffen oder/und Format oder/und Zeitraum oder/und Kontrollzeitraum gebildet wird oder/und einer Aktionsbeschreibung, "Sperren" oder "Ausgabe".

**11.** Verfahren nach einem der vorhergehenden Ansprüche 2 bis 10 , bei dem das Sperren (220) von Zugriffen für eine festgelegte Auszeit, erfolgt, wobei die Auszeit in Abhängigkeit von zumindest einem Kriterium (200), das zum Sperren (220) oder zur Ausgabe (210) der Sperrnachricht führt, festgelegt wird.

**12.** Verfahren nach einem der vorhergehenden Ansprüche 10 oder 11, mit dem weiteren Schritt:
- Erstellen einer Nachricht mit zumindest einem der gespeicherten Kriterien (200).

**13.** Verfahren nach Anspruch 12, mit dem weiteren Schritt:
- Anzeigen der erstellten Nachricht oder/und Senden der erstellten Nachricht, insbesondere einer E-Mail, an eine vorgegebene Adresse

**14.** Verfahren nach einem der Ansprüche 12 oder 13, bei dem die Nachricht die Adresse des Zugriffsursprungs (100) oder/und die Kriterien (200) des Sperrens (220) oder der Ausgabe (210) oder/und den Zeitpunkt der Sperrung oder der Ausgabe oder/und einen Entsperrzeitpunkt oder/und eine Auszeit enthält.

**15.** Verfahren nach einem der vorhergehenden Ansprüche, mit dem weiteren Schritt
- manuelles Rücksetzen der Sperre (220) oder/und automatisches Rücksetzen der Sperre (220) nach Ablauf der Auszeit oder/und zum Entsperrzeitpunkt.

**16.** Computerprogramm zur Ausführung von Programmschritten gemäß einem der vorangegangenen Ansprüche.

**17.** Computerlesbares Medium mit computerlesbaren Instruktionen die dazu geeignet sind, ein Verfahren gemäß einem der Ansprüche 1 bis 15 auszuführen, wenn sie auf einem Computer abgearbeitet werden.

**18.** Netz-Servereinrichtung (120) zum Ermitteln von Daten die mittels eines Zugriffs abgefragt werden können
- mit einer Sicherheitseinrichtung (130) zum Erkennen von Zugriffen
wobei die Sicherheitseinrichtung (130) aufweist
- eine Feststellungseinrichtung zum Ermitteln des Zugriffsursprungs (100);
- eine Ermittlungseinrichtung zum Ermitteln der Anzahl der Zugriffen von dem ermittelten Zugriffsursprung innerhalb eines vorgegebenen Zeitraums;
- eine Vergleichseinrichtung zum Vergleichen der festgestellten Anzahl von Zugriffen mit einer Schwelle;
- einer Ausgabeeinrichtung zum Ausgeben einer Sperrnachricht, wenn die festgestellte Anzahl von Zugriffen größer als die Schwelle ist.

**19.** Netz-Servereinrichtung (120) nach Anspruch 18
mit einer Sperreinrichtung (140), welche insbesondere Bestandteil der Sicherheitseinrichtung (130) ist, zum Sperren von weiteren Zugriffen des Zugriffsursprungs (100) beim Vorliegen einer Sperrnachricht.
